(19) **Europäisches Patentamt / European Patent Office / Office européen des brevets**

(11) **EP 3 983 454 B1**

(12) **EUROPEAN PATENT SPECIFICATION**

(45) Date of publication and mention
of the grant of the patent:
**24.05.2023 Bulletin 2023/21**

(21) Application number: **20727644.5**

(22) Date of filing: **26.05.2020**

(51) International Patent Classification (IPC):
*C08F 210/06* (2006.01)    *C08F 2/00* (2006.01)
*C08J 5/18* (2006.01)    *C08F 210/14* (2006.01)
*C08F 210/16* (2006.01)

(52) Cooperative Patent Classification (CPC):
(C-Sets available)
C08F 210/06; **C08J 5/18;** C08J 2323/14    (Cont.)

(86) International application number:
**PCT/EP2020/064491**

(87) International publication number:
**WO 2020/249388 (17.12.2020 Gazette 2020/51)**

(54) **PROPYLENE BASED POLYMER COMPOSITION**

PROPYLENBASIERTE POLYMERZUSAMMENSETZUNG

COMPOSITION POLYMÈRE À BASE DE PROPYLÈNE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **13.06.2019 EP 19179927**

(43) Date of publication of application:
**20.04.2022 Bulletin 2022/16**

(73) Proprietor: **Basell Poliolefine Italia S.r.l.
20121 Milano (IT)**

(72) Inventors:
• **CAVALIERI, Claudio
44122 Ferrara (IT)**
• **MASSARI, Paola
44121 Ferrara (IT)**
• **CAMURATI, Isabella Maria Vittoria
44122 Ferrara (IT)**
• **PANTALEONI, Roberto
44122 Ferrara (IT)**
• **COLLINA, Gianni
44122 Ferrara (IT)**
• **VITALE, Gianni
44122 Ferrara (IT)**

• **CIARAFONI, Marco
44122 Ferrara (IT)**
• **GADDI, Benedetta
44122 Ferrara (IT)**

(74) Representative: **LyondellBasell
c/o Basell Poliolefine Italia
Intellectual Property
P.le Donegani 12
44122 Ferrara (IT)**

(56) References cited:
**WO-A1-2017/097579    WO-A1-2018/202396
US-A1- 2017 145 199**

EP 3 983 454 B1

(52) Cooperative Patent Classification (CPC): (Cont.)

C-Sets
**C08F 210/06, C08F 2/001;**
**C08F 210/06, C08F 4/6492;**
**C08F 210/06, C08F 4/651;**
**C08F 210/06, C08F 4/6574;**
C08F 210/06, C08F 210/14, C08F 2500/12;
C08F 210/06, C08F 210/16, C08F 210/14,
C08F 2500/12, C08F 2500/27, C08F 2500/35,
C08F 2500/33, C08F 2500/34

**Description**

FIELD OF THE INVENTION

The present disclosure relates to a composition comprising a copolymers of propylene with 1-hexene and a copolymer of propylene and ethylene particularly suited for preparing films, in particular biaxially oriented polypropylene films (BOPP) and cast films having a low seal initiation temperature (SIT) and high crystallization temperature.

BACKGROUND OF THE INVENTION

Copolymer of propylene and 1-hexene are already known in the art, for example WO 2006/002778 relates to a copolymer of propylene and 1-hexene having from 0.2 to 5 wt% of 1-hexene derived units. This copolymer has a molecular weight distribution of monomodal type and are used for pipes systems.

WO2017/097579 relates to a composition comprising a copolymers of propylene with 1-hexene and a copolymer of propylene and ethylene particularly suited for preparing films, in particular biaxially oriented polypropylene films (BOPP) and cast films having a low seal initiation temperature (SIT) and high transparency. The seal initiation temperature obtained is still not satisfactory and can be lowered.

WO 2018/202396 relates to a propylene polymer composition comprising: from 35 wt% to 65 wt% of a propylene 1-hexene copolymer containing from 10.2 to 13% by weight, of 1-hexene derived units and from 35 wt% to 65 wt% of a propylene ethylene copolymer containing from 1.5 wt% to 6.5 wt% of ethylene derived units. Even if the composition exemplified shows a very low SIT the xylene soluble content is very high and as show in the comparative example the number of gels can be reduced.

The applicant found that it is possible to produce BOPP and cast films having a low seal initiation temperature (SIT), high crystallization temperature and low number of gels by using a composition comprising a propylene 1-hexene copolymer and a propylene ethylene copolymer.

SUMMARY OF THE INVENTION

Thus, the present disclosure provides a propylene polymer composition comprising:

a) from 15 wt% to 35 wt% of a propylene 1-hexene copolymer containing from 6.2 to 8.5 % by weight, of 1-hexene derived units having a Melt Flow Rate (MFR, measured according to ASTM D 1238-13, 230°C/2.16 kg, i.e. at 230°C, with a load of 2.16 kg) from 3.5 to 8.5 g/10 min;
b) from 15 wt% to 35 wt% of a propylene 1-hexene copolymer containing from 10.4 to 14.5 % by weight, of 1-hexene derived units having a Melt Flow Rate (MFR, measured according to ASTM D 1238-13, 230°C/2.16 kg, i.e. at 230°C, with a load of 2.16 kg) from 3.5 to 8.5 g/10 min;
c) from 38 wt% to 68 wt% of a propylene ethylene copolymer containing from 3.4 wt% to 5.7 wt% of ethylene derived units, a having a Melt Flow Rate (MFR, measured according to ASTM D 1238-13, 230°C/2.16 kg, i.e. at 230°C, with a load of 2.16 kg) from 3.5 to 12.0 g/10 min;

the sum of the amount of a), b) and c) being 100;
wherein:

i) the total amount of 1-hexene derived units of the component a) and b) ranges from 9.4 wt% to 11.6 wt%;
ii) the xylene soluble content at 25°C of the composition ranges from 14.2 wt% to 19.3 wt%;
iii) the 1-hexene content of the composition ranges from 3.7 wt% to 6.4 wt%;
iv) the melting point of the composition ranges from 128°C to 135°C
v) the xylene soluble content at 25°C of component c) ranges from 3.7 wt% to 7.8 wt%;

DETAILED DESCRIPTION OF THE INVENTION

The present disclosure provides a propylene polymer composition comprising:

a) from 15 wt% to 35 wt% preferably from 20 wt% to 31; more preferably from 22 wt% to 28 wt% of a propylene 1-hexene copolymer containing from 6.2 wt% to 8.5 wt% preferably from 6.8 wt% to 8.1 wt% ; more preferably from 7.1 wt% to 7.9 wt%, of 1-hexene derived units having a Melt Flow Rate (MFR, measured according to ASTM D 1238-13, 230°C/2.16 kg, i.e. at 230°C, with a load of 2.16 kg) from 3.5 to 8.5 g/10 min, preferably ranging from 4.4 to 8.0 g/10 min; more preferably ranging from 5.0 to 7.0 8.5 g/10 min;

b) from 15 wt% to 35 wt% preferably from 20 wt% to 31; more preferably from 22 wt% to 28 wt% of a propylene 1-hexene copolymer containing from 10.4 wt% to 14.5 wt%; preferably from 11.2 wt% to 13.9 wt%; more preferably from 11.6 wt% to 13.3 wt% , of 1-hexene derived units having a Melt Flow Rate (MFR, measured according to ASTM D 1238-13, 230°C/2.16 kg, i.e. at 230°C, with a load of 2.16 kg) from 3.5 to 8.5 g/10 min, preferably ranging from 4.4 to 8.0 g/10 min; more pre10ferably ranging from 5.0 to 7.0 8.5 g/10 min

c) from 38 wt% to 68 wt%; preferably from 42 wt% to 62 wt%; more preferably from 45 wt% to 58 wt% of a propylene ethylene copolymer containing from 3.4 wt% to 5.7 wt%; preferably from 3.9 wt% to 5.1 wt% ; more preferably from 4.2 wt% to 4.9 wt% of ethylene derived units, a having a Melt Flow Rate (MFR, measured according to ASTM D 1238-13, 230°C/2.16 kg, i.e. at 230°C, with a load of 2.16 kg) from 3.5 to 8.5 g/10 min, preferably ranging from 4.4 to 8.0 g/10 min; more preferably ranging from 5.0 to 7.0 8.5 g/10 min;

the sum of the amount of a), b) and c) being 100;
wherein:

i) the total amount of 1-hexene derived units of the component a) and b) ranges from 9.4 wt% to 11.6 wt%; preferably from 9.5 wt% to 11.5 wt%; more preferably from 9.6 wt% to 10.8 wt%;
ii) the xylene soluble content at 25°C of the composition ranges from 14.2 wt% to 19.3 wt%; preferably from 15.3 wt% to 18.7 wt%; more preferably from 16.2 wt% to 18.1 wt%;
iii) the 1-hexene derived units content of the composition ranges from 3.7 wt% to 6.4 wt%; preferably from 3.9 wt% to 5.4 wt%; more preferably from 4.2 wt% to 5.2 wt%
iv) the melting point of the composition ranges from 128°C to 135°C; preferably from 129°C to 133°C;
v) the xylene soluble content at 25°C of component c) ranges from 3.7 wt% to 7.8 wt%; preferably from 4.1 wt% to 6.8 wt%, more preferably from 4.6 wt% to 6.2 wt%.

The propylene 1-hexene copolymer of the present disclosure contains only propylene and 1-hexene derived units. The propylene ethylene copolymer of the present disclosure contains only propylene and ethylene derived units.

The composition of the present disclosure is endowed with a very low seal initiating temperature (SIT) so that this material can be advantageously used for the production of film in particular cast or BOPP films.

In particular the difference between the melting point of the composition and the SIT is particularly large for the composition of the present disclosure. A relatively high melting point allow a better processability of the polymer when used in particular for obtaining film and at the same time a low SIT value improve the use of the film in sealing applications.

Preferably the SIT value is comprised between 70°C and 85°C; preferably between 72°C and 80°C. The difference between the melting point and the SIT (Tm-SIT) preferably ranges from 45°C to 65°C; preferably ranges from 50°C to 62°C.

Furthermore the composition of the present disclosure is endowed with a particularly high crystallization temperature measured by DSC the crystallization temperature is preferably higher than 82.0°C ; more preferably higher than 83.0°C; preferably the crystallization temperature is lower than 100.0°C. The high crystallization temperature improves the processability of the film obtained by using the composition of the present disclosure.

Components a) + b) of the composition of the present disclosure are also preferably endowed with a 1-hexene derived units content in the fraction soluble in xylene at 25°C comprised between 18.0 wt% and 32.0 wt%; preferably from 21.0 wt% and 30.0 wt%. The high content of comonomer in the xylene soluble fraction improve the processability of the composition.

Component c) of the composition of the present disclosure is preferably endowed with ethylene derived units content in the fraction soluble in xylene at 25°C comprised between 10.0 wt% and 17.0 wt%; preferably between 11.0 wt% and wt% and 16.0 wt%; more preferably between 13.0 wt% and 15.0 wt%. this feature improves the processability of the composition for obtaining films.

Components a) b) and c) of the propylene polymer composition are obtained with polymerization processes carried out in the presence of a catalyst comprising the product of the reaction between:

a solid catalyst component comprising Ti, Mg, Cl, and at least one electron donor compound characterized by the fact that it contains from 0.1 to 50%wt of Bi with respect to the total weight of said solid catalyst component; the external donor being preferably esters of glutaric acid, preferably alkyl esters of glutaric acid such as 1 3,3-dipropylglutarate; preferably the ester of glutaric acid are used in mixture with 9,9-bis(alkoxymethyl)fluorene such as 9,9-bis(methoxymethyl)fluorene; the molar ratio between preferably esters of glutaric acid and 9,9-bis(alkoxymethyl)fluorene being from 50:50 to 90: 10; preferably from 60:40 to 80:20; more preferably from 65:35 to 75:25; the alkyl radical being C1-C10 alkyl radical such as methyl, ethyl propyl; butyl radicals;1
(ii) an alkylaluminum compound; and
(iii)an external electron-donor compound having the general formula:

$$(R^1)_aSi(OR^2)_b$$

wherein $R^1$ and $R^2$ are independently selected among alkyl or cycloalkyl radicals with 1-8 carbon atoms and a+b=4.

Preferably, in the catalyst component the content of Bi ranges from 0.5 to 40%wt, more preferably from 1 to 35%wt, especially from 2 to 25%wt and in a very particular embodiment from 2 to 20%wt.

The particles of the solid component have substantially spherical morphology and an average diameter ranging between 5 and 150 $\mu$m, preferably from 20 to 100 $\mu$m and more preferably from 30 to 90 $\mu$m. As particles having substantially spherical morphology, those are meant wherein the ratio between the greater axis and the smaller axis is equal to or lower than 1.5, and preferably lower than 1.3.

In general, the amount of Mg preferably ranges from 8 to 30%wt, more preferably from 10 to 25%wt.

Generally, the amount of Ti ranges from 0.5 to 5%wt, and more preferably from 0.7 to 3%wt.

The Mg/Ti molar ratio is preferably equal to, or higher than, 13, preferably in the range of 14 to 40, and more preferably from 15 to 40. Correspondingly, the Mg/donor molar ratio is preferably higher than 16, more preferably higher than 17 and usually ranging from 18 to 50.

The Bi atoms are preferably derived from one or more Bi compounds not having Bicarbon bonds. In particular, the Bi compounds can be selected from Bi halides, Bi carbonate, Bi acetate, Bi nitrate, Bi oxide, Bi sulphate, and Bi sulfide. Compounds in which Bi has the valence state of $3^+$ are preferred. Among Bi halides, preferred compounds are Bi trichloride and Bi tribromide. The most preferred Bi compound is $BiCl_3$.

The preparation of the solid catalyst component can be carried out according to several methods.

According to one method, the solid catalyst component can be prepared by reacting a titanium compound of the formula $Ti(OR)_{q-y}X_y$, where q is the valence of titanium and y is a number between 1 and q, preferably $TiCl_4$, with a magnesium chloride deriving from an adduct of formula $MgCl_2 \cdot pROH$, where p is a number between 0.1 and 6, preferably from 2 to 3.5, and R is a hydrocarbon radical having 1-18 carbon atoms. The adduct can be prepared in spherical form by mixing alcohol and magnesium chloride, operating under stirring conditions at the melting temperature of the adduct (100-130°C). Then, the adduct is mixed with an inert hydrocarbon immiscible with the adduct, thereby creating an emulsion which is quickly quenched, causing the solidification of the adduct in form of spherical particles. Examples of spherical adducts prepared according to this procedure are described in USP 4,399,054 and USP 4,469,648. The resulting adduct can be directly reacted with a Ti compound, or it can be previously subjected to thermally controlled dealcoholation (80-130°C) so as to obtain an adduct in which the number of moles of alcohol is generally lower than 3, preferably between 0.1 and 2.5. The reaction with the Ti compound can be carried out by suspending the adduct (dealcoholated or not) in cold $TiCl_4$ (generally 0°C); the mixture is heated up to 80-130°C and kept at this temperature for 0.5-2 hours. The treatment with $TiCl_4$ can be carried out one or more times. The electron donor compound can be added in the desired ratios during the treatment with $TiCl_4$.

Several ways are available to add one or more Bi compounds in the catalyst preparation. According to the preferred option, the Bi compound(s) is/are incorporated directly into the $MgCl_2 \cdot pROH$ adduct during its preparation. In particular, the Bi compound can be added at the initial stage of adduct preparation by mixing it together with $MgCl_2$ and the alcohol. Alternatively, it can be added to the molten adduct before the emulsification step. The amount of Bi introduced ranges from 0.1 to 1 mole per mole of Mg in the adduct. Preferred Bi compound(s) to be incorporated directly into the $MgCl_2 \cdot pROH$ adduct are Bi halides, and in particular $BiCl_3$.

The alkyl-Al compound (ii) is preferably chosen from among the trialkyl aluminum compounds such as, for example, triethylaluminum, triisobutylaluminum, tri-n-butylaluminum, tri-n-hexylaluminum, tri-n-octylaluminum. It is also possible to use alkylaluminum halides, alkylaluminum hydrides or alkylaluminum sesquichlorides, such as $AlEt_2Cl$ and $Al_2Et_3Cl_3$, possibly in a mixture with the above cited trialkylaluminums. The Al/Ti ratio is higher than 1 and is generally between 50 and 2000.

The external electron donor compound (iii) is a silicon compound having the general formula:

$$(R^1)_aSi(OR^2)_b \qquad (II)$$

wherein $R^1$ and $R^2$ are independently selected among alkyl or cycloalkyl radicals with 1-8 carbon atoms, optionally containing heteroatoms, wherein a+b=4.

Useful examples of silicon compounds of formula II are (tert-butyl)$_2$Si(OCH$_3$)$_2$, (cyclopentyl)$_2$Si(OCH$_3$)$_2$, (cyclohexyl) (methyl)Si(OCH$_3$)2.

The external electron donor compound (c) is used in such an amount to give a molar ratio between the organoaluminum compound and said external electron donor compound (iii) of from 0.1 to 200, preferably from 1 to 100, and more preferably from 3 to 50.

The polymerization process, which can be continuous or batch, is carried out following known techniques and operating in gas phase, or in liquid phase in the presence or not of inert diluent, or by mixed liquid-gas techniques. It is preferable to carry out the polymerization in gas phase in three reactors one for each component of the composition. Preferably in the first two reactors components a) and b) respectively are obtained while component c) is obtained in the third and last reactor.

Polymerization reaction time, pressure and temperature are not critical, however it is best if the temperature is from 20 to 100°C. The pressure can be atmospheric or higher.

As previously mentioned, the regulation of the molecular weight is carried out by using known regulators, hydrogen in particular.

The composition of the present disclosure can also contain additives commonly used for olefin polymers like, for example, nucleating and clarifying agents and processing aids.

The composition of the present disclosure are preferably characterized by a number of gels No(>0.1 mm) of less than 250; preferably less than 150. The number of gels is indicative of the homogeneity of the product: the lower the number of gels, the greater the homogeneity of the polymer.

The propylene polymer composition of the present disclosure can be advantageously used for the production of films. Preferably cast or BOPP film mono or multilayer wherein at least one layer comprises the composition of the present disclosure.

EXAMPLES

The following examples are given to illustrate the present invention.

The data relating to the polymeric materials and the films of the examples are determined by way of the methods reported below.

Melting and crystallization temperature (ISO 11357-2013)

Determined by differential scanning calorimetry (DSC).according to ISO 11357-20133, at scanning rate of 20°C/min both in cooling and heating, on a sample of weight between 5 and 7 mg., under inert $N_2$ flow. Instrument calibration made with Indium.

Melt Flow Rate (MFR)

Determined according to ASTM D 1238-13, at 230° C, with a load of 2.16 kg.

Solubility in xylene at 25°C

Xylene Solubles has been measured according to ISO 16152-2005; with solution volume of 250 ml, precipitation at 25°C for 20 minutes, 10 of which with the solution in agitation (magnetic stirrer), and drying at 70°

Intrinsic viscosity (IV)

Determined in tetrahydronaphthalene at 135° C.

$^{13}$C NMR of propylene/ethylene copolymers

$^{13}$C NMR spectra were acquired on a Bruker AV-600 spectrometer equipped with cryoprobe, operating at 160.91 MHz in the Fourier transform mode at 120°C.

The peak of the $S_{\beta\beta}$ carbon (nomenclature according to "Monomer Sequence Distribution in Ethylene-Propylene Rubber Measured by 13C NMR. 3. Use of Reaction Probability Mode " C. J. Carman, R. A. Harrington and C. E. Wilkes, Macromolecules, 1977, 10, 536) was used as internal reference at 29.9 ppm. The samples were dissolved in 1,1,2,2-tetrachloroethane-d2 at 120°C with a 8 % wt/v concentration. Each spectrum was acquired with a 90° pulse, 15 seconds of delay between pulses and CPD to remove 1H-13C coupling. 512 transients were stored in 32K data points using a spectral window of 9000 Hz.

The assignments of the spectra, the evaluation of triad distribution and the composition were made according to Kakugo ("Carbon-13 NMR determination of monomer sequence distribution in ethylene-propylene copolymers prepared with δ-titanium trichloride-diethylaluminum chloride" M. Kakugo, Y. Naito, K. Mizunuma and T. Miyatake, Macromolecules, 1982, 15, 1150) using the following equations:

$$PPP = 100\ T_{\beta\beta}/S \qquad PPE = 100\ T_{\beta\delta}/S \qquad EPE = 100\ T_{\delta\delta}/S$$
$$PEP = 100\ S_{\beta\beta}/S \qquad PEE = 100\ S_{\beta\delta}/S \qquad EEE = 100\ (0.25\ S_{\gamma\delta}+0.5\ S_{\delta\delta})/S$$

$$S = T_{\beta\beta} + T_{\beta\delta} + T_{\delta\delta} + S_{\beta\beta} + S_{\beta\delta} + 0.25\ S_{\gamma\delta} + 0.5\ S_{\delta\delta}$$

The molar percentage of ethylene content was evaluated using the following equation:

E% mol = 100 * [PEP+PEE+EEE]The weight percentage of ethylene content was evaluated using the following equation:

$$E\%\ wt. = \frac{* \ E\%\ mol\ *\ MW_E}{E\%\ mol\ *\ MW_{E} + P\%\ mol\ *\ MW_{P}}$$

where P% mol is the molar percentage of propylene content, while $MW_E$ and $MW_P$ are the molecular weights of ethylene and propylene, respectively.

The product of reactivity ratio $r_1 r_2$ was calculated according to Carman (C.J. Carman, R.A. Harrington and C.E. Wilkes, Macromolecules, 1977; 10, 536) as:

$$r_1 r_2 = 1 + \left(\frac{EEE + PEE}{PEP} + 1\right) - \left(\frac{P}{E} + 1\right)\left(\frac{EEE + PEE}{PEP} + 1\right)^{0.5}$$

The tacticity of Propylene sequences was calculated as mm content from the ratio of the PPP $mmT_{\beta\beta}$ (28.90-29.65 ppm) and the whole $T_{\beta\beta}$ (29.80-28.37 ppm)

1-hexene and ethylene content:

Determined by $^{13}$C-NMR spectroscopy in terpolymers:

NMR analysis. $^{13}$C NMR spectra are acquired on an AV-600 spectrometer operating at 150.91 MHz in the Fourier transform mode at 120 °C. The peak of the propylene CH was used as internal reference at 28.83. The $^{13}$C NMR spectrum is acquired using the following parameters:

| | |
|---|---|
| Spectral width (SW) | 60 ppm |
| Spectrum centre (O1) | 30 ppm |
| Decoupling sequence | WALTZ 65_64pl |
| Pulse program [(1)] | ZGPG |
| Pulse Length (P1) [(2)]\ | for 90° |
| Total number of points (TD) | 32K |
| Relaxation Delay [(2)] | 15 s |
| Number of transients [(3)] | 1500 |

The total amount of 1-hexene and ethylene as molar percent is calculated from diad using the following relations:

$$[P] = PP + 0.5PH + 0.5PE$$

$$[H] = HH + 0.5PH$$

$$[E] = EE + 0.5PE$$

Assignments of the $^{13}$C NMR spectrum of propylene/1-hexene/ethylene copolymers have been calculated according to the following table:

| Area | Chemical Shift | Assignments | Sequence |
|------|---------------|-------------|----------|
| 1 | 46.93 - 46.00 | $S_{\alpha\alpha}$ | PP |
| 2 | 44.50 - 43.82 | $S_{\alpha\alpha}$ | PH |
| 3 | 41.34 -4.23 | $S_{\alpha\alpha}$ | HH |
| 4 | 38.00 - 37.40 | $S_{\alpha\gamma}+ S_{\alpha\delta}$ | PE |
| 5 | 35.70 -35.0 | $4B_4$ | H |
| 6 | 35.00 - 34.53 | $S_{\alpha\gamma}+ S_{\alpha\delta}$ | HE |
| 7 | 33.75 33.20 | CH | H |
| 8 | 33.24 | $T_{\delta\delta}$ | EPE |
| 9 | 30.92 | $T_{\beta\delta}$ | PPE |
| 10 | 30.76 | $S_{\gamma\gamma}$ | XEEX |
| 11 | 30.35 | $S_{\gamma\delta}$ | XEEE |
| 12 | 29.95 | $S_{\delta\delta}$ | EEE |
| 13 | 29.35 | $3B_4$ | H |
| 14 | 28.94 - 28.38 | CH | P |
| 15 | 27.43 - 27.27 | $S_{\beta\delta}$ | XEE |
| 16 | 24.67 -24.53 | $S_{\beta\beta}$ | XEX |
| 17 | 23.44 -23.35 | $2B_4$ | H |
| 18 | 21.80 - 19.90 | $CH_3$ | P |
| 19 | 14.22 | $CH_3$ | H |

The 1-hexene contents of component b have been calculated from the 1-hexene total content of the composition by using the formula $C6_{tot}=C6_a xW_a + C6bxWb$, Wheerin C6 is the 1-hexene content and Wa and Wb are the amount of components a and b.

**Seal Initiation Temperature (SIT)**

**Preparation of the film specimens**

Some films with a thickness of 50 $\mu$m are prepared by extruding each test composition in a a single screw Collin extruder (length/diameter ratio of screw 1:25) at a film drawing speed of 7 m/min and a melt temperature do 210-250 °C. Each resulting film is superimposed on a 1000 $\mu$m thick film of a propylene homopolymer having a xylene insoluble fraction of 97 wt% and a MFR L of 2 g/10 min. The superimposed films are bonded to each other in a Carver press at 200°C under a 9000 kg load, which is maintained for 5 minutes. The resulting laminates are stretched longitudinally and transversally, i.e. biaxially, by a factor 6 with a Karo 4 Brueckener film stretcher at 160°C, thus obtaining a 20 $\mu$m thick film (18 $\mu$m homopolymer+2 $\mu$m test).

Determination of the SIT.

Film Strips, 6 cm wide and 35 cm length are cut from the center of the BOPP film he film was superimposed with a BOPP film made of PP homopolymer. The superimposed specimens are sealed along one of the 2 cm sides with a Brugger Feinmechanik Sealer, model HSG-ETK 745. Sealing time is 5 seconds at a pressure of 0.14 MPa (20 psi). The starting sealing temperature is from about 10 °C less than the melting temperature of the test composition. The sealed strip is cut in 6 specimens 15 mm wide long enough to be claimed in the tensile tester grips. The seal strength is tested and load cell capacity 100 N, cross speed 100 mm/min and grip distance 50 mm. The results is expressed as the average of macimum seal strength (N). from are left to cool and then their unsealed ends are attached to an Instron machine where they are tested at a traction speed of 50 mm/min.

The test is than repeated by changing the temperature as follows:

> If seal strength <1.5 N then increase the temperature
> If seal strength >1.5 N then decrease the temperature

Temperature variation must be adjusted stepwise, if seal strength is close to target select steps of 1°C if the strength is far from target select steps of 2°C.

The target seal strength (SIT) is defined as the lowest temperature at which a seal strength higher or equal to 1.5 N is achieved

## Number of gels (fisheve count)

The determination of the number of gels per $m^2$ is carried out by visually detecting the number of gels of a sample film projected by a projector on a white wall-chart with a magnificated scale. Film pieces of 130 x 7.5 cm are cut from a cast film at least 30 minutes after extrusion (die temperature in the range from 250° to 290°C, chill rolls temperature 20°C). The cast film is prepared as above described.

The counting is made on 5 different pieces of the same film and a final number is given by the expression No=A/S where No is the number of gels per $m^2$, A is the number of gels counted on 5 film pieces and S is the overall surface in $m^2$ of the 5 films pieces examined. Gels of irregular shape are measured at the point of maximum extension.

## PREPARATION OF THE COPOLYMER

Catalyst system

## Procedure for the preparation of the spherical adduct

Microspheroidal $MgCl_2 \cdot pC_2H_5OH$ adduct was prepared according to the method described in Comparative Example 5 of WO98/44009, with the difference that $BiCl_3$ in a powder form and in an amount of 3 mol% with respect to the magnesium is added before the feeding of the oil.

## Procedure for the preparation of the **solid catalyst component**

Into a 500 ml round bottom flask, equipped with mechanical stirrer, cooler and thermometer, 300 ml of $TiCl_4$ were introduced at room temperature under a nitrogen atmosphere. After cooling to 0°C, 9.0 g of the spherical adduct (prepared as described above) were added while stirring, then diethyl 3,3-dipropylglutarate was sequentially added into the flask. The amount of charged internal donor was such to meet a Mg/donor molar ratio of 13. The temperature was raised to 100°C and maintained for 2 hours. Thereafter, stirring was stopped, the solid product was allowed to settle and the supernatant liquid was siphoned off at 100°C.

After siphoning, fresh $TiCl_4$ and an amount of 9,9-bis(methoxymethyl)fluorene for producing a Mg/diether molar ratio of 13 was added. The mixture was then heated at 120°C and kept at this temperature for 1 hour under stirring. Stirring was stopped again, the solid was allowed to settle and the supernatant liquid was siphoned off. The solid was washed with anhydrous hexane six times in a temperature gradient down to 60°C and one time at room temperature. The obtained solid was then dried under vacuum and analyzed.

## CATALYST SYSTEM AND PREPOLYMERIZATION TREATMENT

Before introducing it into the polymerization reactor, the solid catalyst component described above is contacted at 15 °C for about 6 minutes with aluminum triethyl (TEAL) and dicyclopentyl dimethoxy silane (DCPMS) as external donor.

The catalyst system is then subjected to prepolymerization by maintaining it in suspension in liquid propylene at 20 °C for about 20 minutes before introducing it into the polymerization reactor.

Polymerization

Into a first gas phase polymerization reactor a propylene 1-hexene copolymer (component (a)) is produced by feeding in a continuous and constant flow the prepolymerized catalyst system, hydrogen (used as molecular weight regulator), propylene and 1-hexene in the gas state. The polypropylene copolymer produced in the first reactor is discharged in a continuous flow and is introduced, in a continuous flow, into a second gas phase polymerization reactor, together with quantitatively constant flows of hydrogen, 1-hexene and propylene in the gas state.

The polypropylene copolymer produced in the second reactor is discharged in a continuous flow and, after having been purged of unreacted monomers, is introduced, in a continuous flow, into a third gas phase polymerization reactor, together with quantitatively constant flows of hydrogen, 1-hexene and propylene in the gas state.

The polymerization conditions are reported in table 1

Table 1

|  |  |  | Ex 1 |
|---|---|---|---|
| catalyst feed |  | g/h | 14.3 |
| TEAL/solid catalyst component weight ratio |  | g/g | 4 |
| TEAL/D donor weight ratio |  | g/g | 10 |
| Prepolimerization |  |  |  |
| temperature |  |  | 20 |
| Residence time |  |  | 34 |
| First gas phase reactor |  |  |  |
| | Polymerisation temperature | °C | 75 |
| | MFR | g/10min | 5.4 |
| | Pressure | barg | 15 |
| | H2/C3 | mol/mol | 0.0035 |
| **C6/C6+C3** |  | mol/mol | **0.135** |
| | split first reactor (amount A) | wt% | 24 |
| | Second gas phase reactor |  |  |
| | Polymerisation temperature | °C | 75 |
| | Pressure | barg | 15 |
| | MFR* | g/10min | 6.1 |
| | H2/C3 | mol/mol | 0.035 |
| **C6/C6+C3** |  | mol/mol | **0.194** |
| | split second reactor (amount B) | wt% | 26 |
| | Third gas phase reactor |  |  |
| | Polymerisation temperature | °C | 65 |
| | Pressure | barg | 14 |
| | MFR* | g/10min | 6.2 |
| | H2/C3 | mol/mol | 0.051 |
| **C2/C2+C3** |  | mol/mol | **0.032** |
| | split third reactor (amount C) | wt% | 50 |
| C3 = propylene; C6 = 1-hexene ; C2 ethylene; H2 = hydrogen | | | |

The polymer obtained according to table 1 have beend additivated with 0.05% Irg.1010; 0.1% Irg.168 and 0.05% CaSt then pellettized. The features of the compositions are reported in table 2

Table 2

|  |  | Ex1 | Comp Ex2 | Comp Ex 3 |
|---|---|---|---|---|
| **component a)** |  |  |  |  |
| MFR | g/10' | 5.4 | 4.2** | 4.4 |

(continued)

|  |  | Ex1 | Comp Ex2 | Comp Ex 3 |
|---|---|---|---|---|
| **component a)** |  |  |  |  |
| split | wt% | 24 | 54 | 60 |
| C6- content | wt% | 7.3 | 10.9 | 7.4 |
| **Xylene soluble 25°C** | Wt% | 18.1 | 35.9* | 18.0 |
| **component b)** |  |  |  |  |
| MFR | gr/10' | 6.8** | - | - |
| C6 content | wt% | 12.2* | - | - |
| split |  | 26 | - | - |
| **Xylene soluble 25°C (a+b)** | Wt% | 28.1 | - |  |
| **C6 Xs fraction** | Wt% | 25.4 | - |  |
| **component c)** |  |  |  |  |
| MFR | gr/10' | 5.5** | 5.4 | 7.8 |
| C2 content | Wt% | 4.7* | 5.0 | 4.6 |
| **Xylene soluble 25°C** | Wt% | 6.0 | 9.6 | 7.0 |
| **C2 Xs fraction** | Wt% | 15 | -- | - |
| **composition** |  |  |  |  |
| MFR tot | g/10' | 5.8 | 4.7 | 5.5** |
| Xylene Soluble 25°C | wt% | 17.1 | 23.8 | 13.1 |
| Tm | °C | 131.3 | 130.3 | 134.4 |
| Tc | °C | 85.9 | 81.9 | - |
| C6 tot | wt% | 4.9 |  |  |
| SIT on BOPP film (RDM) | °C | **75** | **75** | **98** |
| Tm-sit | °C | 56.3 | 55.3 | 36.4 |
| Tm-Tc | °C | 45.4 | 48.4 | - |
| Gels ≥ 0.1mm | nr/m$^2$ | 100 | 760 | - |

C3 = propylene; C6 = 1-hexene ; C2 ethylene;
* calculated by using the formula $logMFRtot = XalogMFRa + XblogMFRb$;
** calculated by using the general formula $Ytot = XaYa + XbYb$ wherein Y is the comonomer content and Xa and Xb are the splits (Xa+Xb=1).

Comparative example 2 is example 4 of WO 2018/202396

Comparative example 3 is example 4 of WO 2017/097579

From table 2 results that the higher Tm-SIT and the lower Tm-Tc are obtained with the composition according to the invention even if the melting point of all the composition are substantially the same. SIT is lower than comparative example 3 even if is the same of comparative example 2 but in addition comparative example 2 has the fraction soluble in xylene almost two times higher.

**Claims**

1. A propylene polymer composition comprising:

a) from 15 wt% to 35 wt% of a propylene 1-hexene copolymer containing from 6.2 to 8.5 % by weight, of 1-hexene derived units having a Melt Flow Rate (MFR, measured according to ASTM D 1238-13, 230°C/2.16 kg, i.e. at 230°C, with a load of 2.16 kg) from 3.5 to 8.5 g/10 min;

b) from 15 wt% to 35 wt% of a propylene 1-hexene copolymer containing from 10.4 wt% to 14.5 wt%, of 1-hexene derived units having a Melt Flow Rate (MFR, measured according to ASTM D 1238-13, 230°C/2.16 kg, i.e. at 230°C, with a load of 2.16 kg) from 3.5 to 8.5 g/10 min;

c) from 38 wt% to 68 wt% of a propylene ethylene copolymer containing from 3.4 wt% to 5.7 wt% of ethylene derived units, a having a Melt Flow Rate (MFR, measured according to ASTM D 1238-13, 230°C/2.16 kg, i.e. at 230°C, with a load of 2.16 kg) from 3.5 to 12.0 g/10 min;

the sum of the amount of a), b) and c) being 100;
wherein:

i) the total amount of 1-hexene derived units of the component a) and b) ranges from 9.4 wt% to 11.6 wt%;
ii) the xylene soluble content at 25°C of the composition ranges from 14.2 wt% to 19.3 wt%;
iii) the 1-hexene content of the composition ranges from 3.7 wt% to 6.4 wt%;
iv) the melting point of the composition ranges from 128°C to 135°C, measured by DSC,
v) the xylene soluble content at 25°C of component c) ranges from 3.7 wt% to 7.8 wt%;

2. The propylene polymer composition according to claim 1 wherein component a) ranges from 20 wt% to 31 wt%; component b) ranges from 20 wt% to 31 wt%; and component c) ranges from 42 wt% to 62 wt%.

3. The propylene polymer composition according to claim 2 wherein component a) ranges from 22 wt% to 28 wt%; component b) ranges from 22 wt% to 28 wt% and component c) ranges from 45 wt% to 58 wt%.

4. The propylene polymer composition according to anyone of claims 1-3 wherein component a) contains from 6.8 wt% to 8.1 wt% of 1-hexene derived units.

5. The propylene polymer composition according to anyone of claims 1-4 wherein component b) contains from 11.2 wt% to 13.9 wt% of 1-hexene derived units.

6. The propylene polymer composition according to anyone of claims 1-5 wherein component c) contains from 3.9 wt% to 5.1 wt% of ethylene derived units.

7. The propylene polymer composition according to anyone of claims 1-6 wherein the sum of components a) + b) have a 1-hexene derived units content in the fraction soluble in xylene at 25°C comprised between 18.0 wt% and 32.0 wt%;

8. The propylene polymer composition according to anyone of claims 1-7 wherein the xylene soluble content at 25°C ranges from 15.3 wt% to 18.7 wt%.

9. The propylene polymer composition according to anyone of claims 1-8 wherein the 1-hexene derived units content of the composition ranges from 3.9 wt% to 5.4 wt%.

10. The propylene polymer composition according to anyone of claims 1-9 wherein the melting point of the composition ranges from 129°C to 133°C.

11. The propylene polymer composition according to anyone of claims 1-10 wherein the xylene soluble content at 25°C of component c) ranges from 4.1 wt% to 6.8 wt%.

12. The propylene polymer composition according to anyone of claims 1-11 wherein component c) has ethylene derived units content in the fraction soluble in xylene at 25°C comprised between 10.0 wt% and 17.0 wt%.

13. A film comprising the propylene polymer composition according to anyone of claims 1-12.

14. The film of claim 13 being a cast film

15. The film of claim 13 being a BOPP film.

**Patentansprüche**

1. Propylenpolymerzusammensetzung, umfassend:

   a) 15 Gew.% bis 35 Gew.% eines Propylen-1-Hexen-Copolymers, das 6,2 bis 8,5 Gew.% von 1-Hexen abgeleitete Einheiten enthält, mit einer Schmelzflussrate (MFR, gemessen gemäß ASTM D 1238-13, 230 °C/2,16 kg, d. h. bei 230 °C, unter einer Last von 2,16 kg) von 3,5 bis 8,5 g/10 min;
   b) 15 Gew.% bis 35 Gew.% eines Propylen-1-Hexen-Copolymers, das 10,4 bis 14,5 Gew.% von 1-Hexen abgeleitete Einheiten enthält, mit einer Schmelzflussrate (MFR, gemessen gemäß ASTM D 1238-13, 230 °C/2,16 kg, d. h. bei 230 °C, unter einer Last von 2,16 kg) von 3,5 bis 8,5 g/10 min;
   c) 38 Gew.% bis 68 Gew.% eines Propylen-Ethylen-Copolymers, das 3,4 bis 5,7 Gew.% von Ethylen abgeleitete Einheiten enthält, mit einer Schmelzflussrate (MFR, gemessen gemäß ASTM D 1238-13, 230 °C/2,16 kg, d. h. bei 230 °C, unter einer Last von 2,16 kg) von 3,5 bis 12,0 g/10 min;

   wobei die Summe der Mengen von a), b) und c) 100 beträgt;
   wobei:

   i) die Gesamtmenge der von 1-Hexen abgeleiteten Einheiten der Komponente a) und b) im Bereich von 9,4 Gew.% bis 11,6 Gew.% liegt;
   ii) der in Xylol bei 25 °C lösliche Gehalt der Zusammensetzung im Bereich von 14,2 Gew.% bis 19,3 Gew.% liegt;
   iii) der 1-Hexengehalt der Zusammensetzung im Bereich von 3,7 Gew.% bis 6,4 Gew.% liegt;
   iv) der Schmelzpunkt der Zusammensetzung im Bereich von 128 °C bis 135 °C liegt, gemessen mittels DSC;
   v) der in Xylol bei 25 °C lösliche Gehalt der Komponente c) im Bereich von 3,7 Gew.% bis 7,8 Gew.% liegt.

2. Propylenpolymerzusammensetzung nach Anspruch 1, wobei Komponente a) im Bereich von 20 Gew.% bis 31 Gew.% liegt; Komponente b) im Bereich von 20 Gew.% bis 31 Gew.% liegt; und Komponente c) im Bereich von 42 Gew.% bis 62 Gew.% liegt.

3. Propylenpolymerzusammensetzung nach Anspruch 2, wobei Komponente a) im Bereich von 22 Gew.% bis 28 Gew.% liegt; Komponente b) im Bereich von 22 Gew.% bis 28 Gew.% liegt; und Komponente c) im Bereich von 45 Gew.% bis 58 Gew.% liegt.

4. Propylenpolymerzusammensetzung nach einem der Ansprüche 1 bis 3, wobei Komponente a) 6,8 Gew.% bis 8,1 Gew.% von 1-Hexen abgeleitete Einheiten enthält.

5. Propylenpolymerzusammensetzung nach einem der Ansprüche 1 bis 4, wobei Komponente b) 11,2 Gew.% bis 13,9 Gew.% von 1-Hexen abgeleitete Einheiten enthält.

6. Propylenpolymerzusammensetzung nach einem der Ansprüche 1 bis 5, wobei Komponente c) 3,9 Gew.% bis 5,1 Gew.% von Ethylen abgeleitete Einheiten enthält.

7. Propylenpolymerzusammensetzung nach einem der Ansprüche 1 bis 6, wobei die Summe der Komponenten a) + b) einen Gehalt an von 1-Hexen abgeleiteten Einheiten in der in Xylol bei 25 °C löslichen Fraktion hat, der zwischen 18,0 Gew.% und 32,0 Gew.% liegt.

8. Propylenpolymerzusammensetzung nach einem der Ansprüche 1 bis 7, wobei der in Xylol bei 25 °C lösliche Gehalt im Bereich von 15,3 Gew.% bis 18,7 Gew.% liegt.

9. Propylenpolymerzusammensetzung nach einem der Ansprüche 1 bis 8, wobei der Gehalt der Zusammensetzung an von 1-Hexen abgeleiteten Einheiten im Bereich von 3,9 Gew.% bis 5,4 Gew.% liegt.

10. Propylenpolymerzusammensetzung nach einem der Ansprüche 1 bis 9, wobei der Schmelzpunkt der Zusammensetzung im Bereich von 129 °C bis 133 °C liegt.

11. Propylenpolymerzusammensetzung nach einem der Ansprüche 1 bis 10, wobei der in Xylol bei 25 °C lösliche Gehalt von Komponente c) im Bereich von 4,1 Gew.% bis 6,8 Gew.% liegt.

12. Propylenpolymerzusammensetzung nach einem der Ansprüche 1 bis 11, wobei Komponente c) einen Gehalt an von Ethylen abgeleiteten Einheiten in der in Xylol bei 25 °C löslichen Fraktion hat, der zwischen 10,0 Gew.% und 17,0 Gew.% liegt.

13. Film, umfassend die Propylenpolymerzusammensetzung nach den Ansprüchen 1 bis 12.

14. Film nach Anspruch 13, der ein gegossener Film ist.

15. Film nach Anspruch 13, der ein BOPP-Film ist.

**Revendications**

1. Composition de polymère de propylène comprenant :

   a) 15 % en poids à 35 % en poids d'un copolymère de propylène et de 1-hexène contenant 6,2 à 8,5 % en poids de motifs dérivés de 1-hexène, présentant un indice de fluidité à chaud (MFR, mesuré selon la norme ASTM D 1238-13, 230 °C/2,16 kg, c'est-à-dire à 230 °C, sous une charge de 2,16 kg) de 3,5 à 8,5 g/10 min ;
   b) 15 % en poids à 35 % en poids d'un copolymère de propylène et de 1-hexène contenant 10,4 % en poids à 14,5 % en poids de motifs dérivés de 1-hexène, présentant un indice de fluidité à chaud (MFR, mesuré selon la norme ASTM D 1238-13, 230 °C/2,16 kg, c'est-à-dire à 230 °C, sous une charge de 2,16 kg) de 3,5 à 8,5 g/10 min ;
   c) 38 % en poids à 68 % en poids d'un copolymère de propylène et d'éthylène contenant 3,4 % en poids à 5,7 % en poids de motifs dérivés d'éthylène, présentant un indice de fluidité à chaud (MFR, mesuré selon la norme ASTM D 1238-13, 230 °C/2,16 kg, c'est-à-dire à 230 °C, sous une charge de 2,16 kg) de 3,5 à 12,0 g/10 min ;

   la somme des quantités de a), b) et c) valant 100 ;
   où

   i) la quantité totale de motifs dérivés de 1-hexène des constituants a) et b) est située dans la plage de 9,4 % en poids à 11,6 % en poids ;
   ii) la teneur soluble dans le xylène à 25 °C de la composition est située dans la plage de 14,2 % en poids à 19,3 % en poids ;
   iii) la teneur en 1-hexène de la composition est située dans la plage de 3,7 % en poids à 6,4 % en poids ;
   iv) le point de fusion de la composition est situé dans la plage de 128 °C et 135 °C, mesuré par DSC,
   v) la teneur soluble dans le xylène à 25 °C du constituant c) est située dans la plage de 3,7 % en poids à 7,8 % en poids.

2. Composition de polymère de propylène selon la revendication 1, le constituant a) représentant 20 % en poids à 31 % en poids ; le constituant b) représentant 20 % en poids à 31 % en poids ; et le constituant c) représentant 42 % en poids à 62 %.

3. Composition de polymère de propylène selon la revendication 2, le constituant a) représentant 22 % en poids à 28 % en poids ; le constituant b) représentant 22 % en poids à 28 % en poids et le constituant c) représentant 45 % en poids à 58 % en poids.

4. Composition de polymère de propylène selon l'une quelconque des revendications 1 à 3, le constituant a) contenant 6,8 % en poids à 8,1 % en poids de motifs dérivés de 1-hexène.

5. Composition de polymère de propylène selon l'une quelconque des revendications 1 à 4, le constituant b) contenant 11,2 % en poids à 13,9 % en poids de motifs dérivés de 1-hexène.

6. Composition de polymère de propylène selon l'une quelconque des revendications 1 à 5, le constituant c) contenant 3,9 % en poids à 5,1 % en poids de motifs dérivés d'éthylène.

7. Composition de polymère de propylène selon l'une quelconque des revendications 1 à 6, la somme des constituants a) + b) présentant une teneur en motifs dérivés de 1-hexène dans la fraction soluble dans le xylène à 25 °C comprise entre 18,0 % en poids et 32,0 % en poids.

8. Composition de polymère de propylène selon l'une quelconque des revendications 1 à 7, la teneur soluble dans le xylène à 25 °C étant située dans la plage de 15,3 % en poids à 18,7 % en poids.

9. Composition de polymère de propylène selon l'une quelconque des revendications 1 à 8, la teneur en motifs dérivés de 1-hexène de la composition étant située dans la plage de 3,9 % en poids à 5,4 % en poids.

10. Composition de polymère de propylène selon l'une quelconque des revendications 1 à 9, le point de fusion de la composition étant situé dans la plage de 129 °C à 133 °C.

11. Composition de polymère de propylène selon l'une quelconque des revendications 1 à 10, la teneur soluble dans le xylène à 25 °C du constituant c) étant située dans la plage de 4,1 % en poids à 6,8 % en poids.

12. Composition de polymère de propylène selon l'une quelconque des revendications 1 à 11, le constituant c) présentant une teneur en motifs dérivés d'éthylène dans la fraction soluble dans le xylène à 25 °C comprise entre 10,0 % en poids et 17,0 % en poids.

13. Film comprenant la composition de polymère de propylène selon l'une quelconque des revendications 1 à 12.

14. Film selon la revendication 13 qui est un film coulé

15. Film selon la revendication 13 qui est un film de BOPP.

## REFERENCES CITED IN THE DESCRIPTION

**Patent documents cited in the description**

- WO 2006002778 A
- WO 2017097579 A
- WO 2018202396 A
- US 4399054 A
- US 4469648 A
- WO 9844009 A

**Non-patent literature cited in the description**

- **C. J. CARMAN ; R. A. HARRINGTON ; C. E. WILKES.** Monomer Sequence Distribution in Ethylene-Propylene Rubber Measured by 13C NMR. 3. Use of Reaction Probability Mode. *Macromolecules,* 1977, vol. 10, 536
- **M. KAKUGO ; Y. NAITO ; K. MIZUNUMA ; T. MIYATAKE.** Carbon-13 NMR determination of monomer sequence distribution in ethylene-propylene copolymers prepared with δ-titanium trichloride-diethylaluminum chloride. *Macromolecules,* 1982, vol. 15, 1150
- **C.J. CARMAN ; R.A. HARRINGTON ; C.E. WILKES.** *Macromolecules,* 1977, vol. 10, 536